(19) Europäisches Patentamt

European Patent Office

Office européen des brevets

(11) EP 0 418 593 B2

(12) NEUE EUROPÄISCHE PATENTSCHRIFT

(45) Veröffentlichungstag und Bekanntmachung des Hinweises auf die Entscheidung über den Einspruch:
**10.12.1997 Patentblatt 1997/50**

(51) Int. Cl.⁶: **A23L 1/305**, A23C 9/152, A23C 9/13

(45) Hinweis auf die Patenterteilung:
**03.11.1993 Patentblatt 1993/44**

(21) Anmeldenummer: **90116288.3**

(22) Anmeldetag: **24.08.1990**

(54) **Protein-, Peptid- und Aminosäurenmischungen mit optimierter Aminosäurenzusammensetzung**

Protein-, peptid- and amino acid mixtures with optimized amino acid composition

Mélanges de protéines, de peptides et d'acides aminés ayant une composition d'acides aminés optimalisée

(84) Benannte Vertragsstaaten:
AT BE CH DE DK ES FR GB GR IT LI LU NL SE

(30) Priorität: **28.08.1989 DE 3928418**

(43) Veröffentlichungstag der Anmeldung:
**27.03.1991 Patentblatt 1991/13**

(73) Patentinhaber:
MILUPA GmbH & Co. KG
61381 Friedrichsdorf (DE)

(72) Erfinder:
• Harzer, Gerd, Dr.
D-8150 Holzkirchen (DE)
• Sawatzki, Günther, Dr.
D-6308 Butzbach (DE)
• Schweikhardt, Friedrich, Dr.
D-6382 Friedrichsdorf (DE)
• Georgi, Gilda, Dr.
D-6382 Friedrichsdorf (DE)

(74) Vertreter:
Köster, Hajo, Dr. et al
Jaeger, Böck & Köster,
Patentanwälte,
Postfach 16 20
82121 Gauting b. München (DE)

(56) Entgegenhaltungen:
EP-A- 0 034 034          EP-A- 0 126 666
EP-A- 0 148 680          EP-A- 0 312 612
DD-A-   251 278          DE-B- 2 654 820

• C WPIL / DERWENT AN 83-702280  27 DERWENT PUBLICATIONS LTD. LONDON, GB & JP-A-58088323 ZH RYOSHOKU KENKYUK 26.05.83
• J.G. Bindels, G. Harzer, Ernährungsumschau 32 (1985)
• G. Harzer, J.G. Bindels, Protein in der Säuglingsernährung, Ed. F. Haschle 1988, Enke Verlag, Seote 4-11
• G. Harzer, J.G. Bindels, Composition and Physiological Properties of Human Milk, Ed. J. Schaub, 1985, Elsevier Science, Seite 285-295
• First report of the Scientific Committee for Food on the essentialrequirements of infant formulae and follow-up milks based on cow's milk proteins (1983) Food-Science and Techniques Commission EC, 14th SeriesEUR 8752, Seite 9-32
• Prentice A. Ewing G. et al The nuticional role of breast-milk Iga and lactoferrin. Acta Paediatr Scand, 1987, 76, Seite 592-598
• Haschke F. et al, Quantität und Qualität der Eiweisszufuhr im ersten Lebensjahr. Protein in der Säuglingsernährung. Symposium am 4. September 1987 in Salzburg, Ferdinand Enke Verlag, Stuttgart 1988, Seite 84-92
• Renner E., Milch und Milchprodukte in der Ernährung des Menschen, VV GmbH, Volkswirtschaftlicher Verlag, München (1982), Seite 101-108
• Harzer G. "Über die Zusammensetzung der Muttermilch - zur Adaption von Säuglingsmilchnahrungen" Habilitationsschrifts 1989

**Beschreibung**

Die Erfindung betrifft Protein-, Peptid- und Aminosäurenmischungen mit optimierter Aminosäurenzusammensetzung sowie deren Verwendung zur Herstellung von Frühgeborenen- und Säuglingsnahrungen sowie von Zusätzen zur Frauenmilch.

Der Aminosäurebedarf des Säuglings wird in der Regel nach Art und Menge aus der Aminosäurenzusammensetzung der Muttermilch abgeleitet. Als Basis dient dabei das darin enthaltene Gesamteiweiß. Muttermilch wird deshalb von einer Reihe offizieller Organe (FAO/WHO, ESPGAN) als Basis für die Beurteilung der Proteinqualität (Chemical Score) in Säuglingsnahrungen herangezogen (1,2,3). Da die Aminosäuren in der Frauenmilch aus verschiedenen Proteinen mit unterschiedlicher Aminosäurezusammensetzung stammen, von denen z.B das Immunglobulin A und das Laktoferrin den Magendarmtrakt praktisch unverdaut verlassen (4,5,6), stehen dem Säugling nicht alle Aminosäuren der Muttermilch zur Synthese von körpereigenem Eiweiß zur Verfügung. Die Gesamtaminosäurenzusammensetzung der Muttermilch gibt deshalb nicht das ideale Amnosäuremuster für den Chemical Score wieder und ist deshalb als Basis zur Beurteilung der Muttermilch nicht optimal.

Bisher war es üblich, die Eiweißqualität von industriell hergestellten Säuglingsnahrungen und Säuglingsmilchnahrungen am Gesamteiweiß der Frauenmilch zu orientieren (Aminosäurezusam mensetzung, Chemical Score). Herkömmliche bzw. bekannte Nahrungen für Säuglinge und Frühgeborene wurden daher auf Basis dieses Chemical Score zusammengestellt. Allerdings konnten bei Säuglingen und Frühgeborenen, die mit derartigen bekannten Nahrungen ernährt werden. häufig Imbalanzen der Serumaminosäuren und erhöhte Harnstoffwerte, im Vergleich zu den Werten gestillter Kinder, beobachtet werden. Diese Imbalanzen sind gekennzeichnet durch hohe Threonin-, Methionin-, Valin-, Isoleucin-, Leucin-, Phenylalanin- und Tyrosinspiegel und beruhen auf der ernährungsphysiologisch wenig ausgewogenen Aminosäurenzusammensetzung herkömmlicher Säuglingsnahrungen, die als Eiweißbasis in der Regel Kuhmilcheiweiß mit einem bestimmten Casein-, Molkenprotein-Verhältnis, z.B. 80/20 oder 40/60 oder 60/40 enthalten.

Mit derartigen bekannten Nahrungen ernährte Kinder unterscheiden sich somit hinsichflich der Physiologie ihres Aminosäurenstoffwechsels deutlich von gestillten Kindern, mit der Tendenz, zu Serumaminosäureimbalanzen und hohen Harnstoffsäurewerten. Der Klarheit halbersollte an dieser Stelle angemerkt werden, daß die bekannten Nahrungen ausreichend Fette und Kohlenhydrate zur Energiegewinnung enthalten und daß die hier im Zusammenhang mit den Aminosäuren gemachten Aussagen unter dieser Vorraussetzung stehen.

Bei Frühgeborenen und jungen Säuglingen führen reichliche Proteingaben außerdem zu relativ starken renalen Belastungen, was klinisch durch vermehrte Ausscheidung von Aminosäuren und deren Metaboliten im Urin nachgewiesen werden kann (Aminoacidurie, spezielle Cystinurie, Methioniurie, Sulfatexkretion).

Außerdem haben Frühgeborene im Vergleich zu Reifgeborenen einen deutlich höheren Eiweißbedarf, der üblicherweise aus der fetalen Eiweißeinlagerung während der 26. bzw. 36. Schwangerschaftswoche abgeleitet wird. Unter der Annahme einer 80%igen Eiweißausnutzung berechnen Pohlandt und Kupferschmid (7) einen Bedarf von 2,7 g/kg/Tag für die 30. bis 31. postkonzeptionale Woche, sowie 1,3 g/kg/Tag für die 38. Woche. Dieser Bedarf kann durch Frauenmilch (Eiweißgehalt ca. 1%) nicht gedeckt werden, was vor allem zu einem zu langsamem Wachstum des Säuglings führt.

Um den speziellen Bedarf des frühgeborenen Säuglings zu decken, wurden spezielle Frühgeborenennahrungen mit einer hohen Energiedichte und einem relativ hohen Eiweißgehalt auf der Basis von Kuhmilchprotein mit einem Casein/Molkenprotein-Verhältnis von 40/60 und einem Eiweißgehalt von 1,5 bis 2,1 % entwickelt.

In den letzten Jahren gewann darüber hinaus das sogennante "Human Milk Engineering" an Bedeutung, wobei gepoolte Frauenmilch mit isoliertem Frauenmilcheiweiß angereichert wird. Aus verständlichen Gründen ist dies jedoch in der Praxis der Frühgeborenen- und Säuglingsernährung auf Intensivstationen kaum zu verwirklichen.

Aufgabe der vorliegenden Erfindung ist es, verbesserte Protein-, Peptid- und Aminosäurenmischungen mit optimierter Aminosäurezusammensetzung bereitzustellen, die zur Herstellung von Nahrungen und insbesondere Säuglingsmilchnahrungen oder von Zusätzen zur Frauenmilch zum Zwecke der Frühgeborenenernährung verwendet werden können und dem Aminosäurebedarf des Frühgeborenen und Säuglings in qualitativer und quantitativer Weise optimal entsprechen.

Gelöst wird diese Aufgabe durch die Lehre der Ansprüche.

Es wurde nun überraschend gefunden, daß die bei der Ernährung von Säuglingen mit den oben genannten, bekannten adaptierten oder teiladaptierten Nahrungen beobachteten Imbalanzen der Serumaminosäuren nicht auftreten, wenn die Säuglinge mit einer Nahrung ernährt werden, deren Aminosäurezusammensetzung dem sogenannten nutritiven Eiweißanteil der Frauenmmilch entspricht. Die Aminosäurenzusammensetzung der in dieser Nahrung eingesetzten erfindungsgemäßen Protein-, Peptid- und Aminosäuremischung wurde somit in Gegensatz zu der bisherigen Praxis für die Beurteilung der Eiweißqualität sowie der Optimierung im Zusammenhang mit Säuglingsmilchnahrungen nicht auf Basis der Aminosäurenzusammensetzung des Gesamtfrauenmilcheiweißes sondern auf Basis des sogenannten nutritiven Eiweißanteiles der Frauenmilch zusammengestellt.

Es wurde ferner überraschend gefunden, daß man für die Herstellung der erfindungsgemäßen Protein-. Peptid- und Aminosäuremischungen (im folgenden wird nur noch der Begriff Aminosäuremischungen verwendet, der jedoch für eine derartige Protein-, Peptid- und Aminosäuremischung steht) Aminosäuren in freier Form einsetzen kann. Sollte es beispielsweise nicht oder nur schwer möglich sein, die gewünschte Aminosäurenzusammensetzung durch Mischen verschiedener, beispielsweise im Handel erhältlicher Eiweiße, Proteine und/oder Peptide zu erreichen, dann kann man Aminosäuren in freier Form zugeben, um zu erreichen, daß diese Aminosäuremischungen die angeführten Aminosäuren in dem beanspruchten Bereich enthalten.

Erfindungsgemäß wird somit eine Aminosäuremischung mit folgender Aminosäurenzusammensetzung bereitgestellt:

| Aminosäuren | g/100 g Gesamtaminosäuren |
|---|---|
| Asparaginsäure + Asparagin | 7,69 - 10,41 |
| Threonin | 3,62 - 4,90 |
| Serin | 3,33 - 4,51 |
| Glutaminsäure + Glutamin | 15,71 - 21,25 |
| Prolin | 8,70 - 11,76 |
| Glycin | 1,27 - 1,73 |
| Alanin | 2,53 - 3,43 |
| Cystin + Cystein | 1,45 - 2,17 |
| Valin | 4,56 - 6,16 |
| Methionin | 1,42 - 2,12 |
| Isoleucin | 5,58 - 7,54 |
| Leucin | 9,04 - 12,24 |
| Tyrosin | 3,98 - 5,38 |
| Phenylalanin | 3,19 - 4,31 |
| Histidin | 2,49 - 3,37 |
| Lysin | 6,56 - 8,88 |
| Arginin | 1,99 - 2,69 |
| Tryptophan | 1,72 - 2,32 |

Die erfindungsgemäße Mischung muß die Aminosäuren in einer solchen Form enthalten, daß sie für den Säugling verdaulich sind. Mit anderen Worten, nur solche Eiweiße, Peptide und Hydrolysate etc. werden bei der Zusammenstellung der erfindungsgemäßen Mischungen berücksichtigt, die im Magen-Darm-Trakt des Säuglings in kleinere "Einheiten" (sofern erforderlich) aufgespalten und dann resorbiert werden. Die frei vorliegenden Aminosäuren werden natürlich als solche resorbiert. Diejenigen Proteine etc., die vom Säugling nicht in eine resorbierbare Form aufgespalten werden können und somit ausgeschieden werden, bleiben unberücksichtigt. Obige Tabelle bezieht sich demzufolge nur auf solche Aminosäuren, die in "resorbierbarer Form" vorliegen.

Um die eingangs erwähnten Imbalanzen zu vermeiden, ist es wichtig, daß alle aufgeführten Aminosäuren in dem erfindungsgemäß beanspruchten Bereich in der erfindungsgemäßen Nahrung vorhanden sind. Diese Imbalanzen müssen natürlich dann nicht notwendigerweise und in starkem Ausmaße auftreten, wenn eine der aufgeführten Aminosäuren in einer Menge vorliegt, die geringfügig außerhalb des angegebenen Bereiches liegt. Derartige Imbalanzen können jedoch bereits dann sehr ausgeprägt sein, wenn nur eine Aminosäure in einer Menge vorliegt, die beträchtlich außerhalb des angeführten Bereichs liegt.

Für die Herstellung der erfindungsgemäßen Aminosäuremischungen wird man natürlich aus Kostengründen versuchen, sowenig wie möglich freie Aminosäuren zu verwenden, da letztere teurer sind als übliche, für die Ernährung eingesetzte Proteine etc. Die freien Aminosäuren werden daher eingesetzt, um eine Mischung aus Proteinen etc. so zu vervollständigen und daher zu optimieren, daß die Mischung die gewünschte Aminosäuren-zusammensetzung besitzt.

Voraussetzung für die Optimierung von Proteinmischungen ist, daß von allen Rohstoffen, die bei der Entwicklung der Mischungen zum Einsatz kommen sollen, die Aminosäurenzusammensetzung entweder von vornherein bekannt

oder durch Analyse ermittelt worden ist.

Prinzipiell istjedes Protein durch eine ihm eigene Aminosäurezusammensetzung gekennzeichnet. Seine biologische Wertigkeit hängt dabei im wesentlichen von den relativen Mengen der vorkommenden Aminosäuren ab. Aus Eiweißen mit verschiedener biologischer Wertigkeit können durch Mischen ernährungsphysiologisch hochwertige Produkte erhalten werden. In der Regel wird dabei zu einem Protein mit der limitierenden Aminosäure X ein Protein beigemischt, das gerade diese Aminosäure in hoher Konzentration enthält.

Die Aminosäuredaten werden nach bekannten Analysenmethoden erhalten, indem man z.B. die Rohstoffproben mit 6-molarer Salzsäure unter Ausschluß von Luftsauerstoff 16 h hydrolisiert. Cystin und Methionin werden zusätzlich nach Oxydation mit Perameisensäure bestimmt, desgleichen Tryptophan separat mit einer bekannten herkömmlichen HPLC-Methode(Inoue et al., Anal. Biochem. 1983, Bd. 132, S.468 - 480)

Folgende Aminosäuren gehen in die Berechnung zur Optimierung ein : a) essentielle L-Aminosäuren: Threonin, Cystin, Valin, Methionin, Isoleucin, Leucin, Tyrosin, Phenylalanin, Histidin, Lysin und Tryptophan; b) nicht essentielle L-Aminosäuren: Asparaginsäure, Serin, Glutaminsäure, Prolin, Glycin, Alanin und Arginin.

Bei der Durchführung dererforderlichen Berechnungen muß natürlich der Tatsache genüge getan werden, daß manche Rohstoffe nicht nur aus Aminosäuren aufgebaut sind. Das gleiche gilt für das Zusammengeben der Rohstoffe, um die erfindungsgemäßen Mischung herzustellen.

Der im Rahmen der vorliegenden Unterlagen verwendete Ausdruck "Protein-, Peptid- und Aminosäurenmischunge" bezeichnet Mischungen auf Basis von Proteinen, Peptiden, Hydrolysaten etc. und reinen Aminosäuren. In diesen Mischungen können somit Proteine, Peptide und Hydrolysate alleine oder zusammen vorliegen. Diese Mischungen können unterschiedliche Proteine und/oder Peptide enthalten. Zur Optimierung können Aminosäuren in reiner Form enthalten sein. Mit anderen Worten, die nach Herstellung der erfindungsgemäßen Mischungen in diesen Mischungen vorhandenen Aminosäuren müssen nicht notwendigerweise aus einem Protein oder Peptid stammen bzw. ein Bestandteil dessen sein, sondern können auch - wie bereits gesagt - in reiner Form der herzustellenden Mischungen einverleibt werden. Die optimierte Aminosäurenzusammensetzung bezieht sich natürlich auf die Summe der insgesamt in einer Mischung vorhandenen Aminosäuren.

Die erfindungsgemäßen Mischungen enthalten die hier in Rede stehenden Aminosäuren vorzugsweise in den im Anspruch 2 aufgeführten Mengen.

Wie bereits eingangs ausgeführt, besteht ein wesentlicher Gedanke dervorliegenden Erfindung darin, daß die erfindungsgemäßen Mischungen hinsichtlich ihrer Aminosäurenzusammensetzung der Aminosäurenzusammensetzung des sogenannten nutritiven Eiweißanteiles der Frauenmilch in etwa entspricht. Diese Aminosäurenzusammensetzung gemäß dem nutritiven Eiweißanteil ist in der Tabelle I am Ende der Beschreibung wiedergegeben. Bei den Eiweißen, welche zu diesem nutritiven Eiweißanteil zählen, handelt es sich im wesentlichen um Caseine, $\alpha$-Laktalbumin und Serumalbumin.

Als Rohstoffe für die erfindungsgemäßen Mischungen können insbesondere handelsübliche Proteine oder Peptide und handelsübliche proteinhaltige Rohstoffe, wie Kuhmilch, Kuhmilchproteine, isolierte Kuhmilchproteinfraktionen, Proteinhydrolysate, Peptide und L-Aminosäuren dienen. Auch andere tierische und pflanzliche Proteine, wie Sojaeiweiß, Ziegenmilcheiweiß, Rindfleischeiweiß usw. können eingesetzt werden.

Erfindungsgemäß können somit Kuhmilchproteine, isolierte Kuhmilchproteinfraktionen, Proteinhydrolysate, Peptide und/oder L-Aminosäuren sowie auch andere tierische und auch pflanzliche Proteine, wie Sojaeiweiß, Ziegenmilcheiweiß, Rindfleischeiweiß usw. mit Peptiden (u.a. aus Hydrolysaten) und/oder L-Aminosäure in verschiedenen Gewichtsverhältnissen derart kombiniert werden, daß ein Produkt mit für Säuglinge ernährungsphysiologisch optimalem Aminosäuremuster und hoher biologischer Wertigkeit entsprechend dem nutritiven Eiweißanteil der Frauenmilch oder jedem anderen Referenzprotein entsteht.

Die erfindungsgemäßen Mischungen mit einer optimierten Aminosäurenzusammensetzung können erfindungsgemäß als Zusatz zur Proteinanreicherung von Frauenmilch oder als Basis zur Herstellung von Frühgeborenen- und Säuglingsnahrungen eingesetzt werden.

Im klinischen Versuch hat sich gezeigt, daß die Aminosäuremuster im Blut von Säuglingen, die mit Muttermilch zuzüglich einem Supplement, das in seiner Aminosäurezusammensetzung dem nutritiven Anteil der Muttermilch entspricht, ernährt wurden, ausgeglichen sind und denjenigen von Kindern, die mit Muttermilch plus Frauenmilchproteinanreicherung ernährt wurden. entsprechen. Die entsprechenden Ergebnisse dieser klinischen Untersuchung sind weiter unten näher erläutert. Mit herkömmlichen Säuglings- und Frühgeborenennahrung ist dies nicht zu erreichen. In der Regel haben entsprechend ernährte Kinder unausgeglichene Aminosäuremuster im Blut, was auf Imbalanzen hinweist und ein Indiz für eine zu starke Belastung der noch unreifen kindlichen Niere ist.

Die erfindungsgemäß entwickelten Mischungen haben eine physiologisch ausgewogene Aminosäurezusammensetzung, vermeiden, wie gezeigt, unphysiologische Stoffwechselbelastungen und führen zu gutem Gedeihen der Kinder, sowie zu einer ausgeglichenen Stoffwechsellage.

Die Verwendung der erfindungsgemäßen Mischungen als Basis für industriell herzustellende Frühgeborenen- und Säuglingsmilchnahrungen hat sich klinisch bewährt und führt zum physiologischen Gedeihen der Kinder.

Hervorzuheben ist die ausgeglichene Stoffwechsellage, vor allem die Aminosäurespiegel im Blut, die denen frauenmilchernährter Säuglinge eher entsprechen als denen mit herkömmlichen Säuglings- und Frühgeborenenmilchnahrungen ernährten Kindern.

Die technischen und chemisch-physikalischen Eigenschaften der erfindungsgemäßen Proteinmischungen sollten derart sein, daß sie zusammen mit Frauenmilch oder mit industriell hergestellten Frühgeborenen- und und Säuglingsmilchnahrungen eine Nahrung bilden, die ausreichend löslich ist und problemlos verabreicht werden kann. Aminosäuren und Proteinkonzentrat in Pulverform können trocken gemischt und granuliert werden. Jedoch hat sich in der Praxis gezeigt, daß derartige Mischungen instabil sind, zur Entmischung neigen können und vor allem meist schlecht löslich sind.

Gegenstand der Erfindung ist daher auch ein Verfahren zur Herstellung von Zusätzen (Supplementen) zur Frauenmilch sowie von Frühgeborenen- und Säuglingsnahrung auf Basis einer erfindungsgemäß bereitgestellten Protein-, Peptid- und Aminosäuremischung, wobei man die erfindungsgemäß bereitgestellten Mischungen, ggf. zusammen mit Vitaminen, Spurenelementen, Mineralstoffen, Fetten (z.B. Milchfett, Pflanzenfett) und/oder Kohlenhydraten (z.B. Laktose, Maltodextrin, Stärke) und geeigneten Emulgatoren in einem flüssigen Medium, beispielsweise Wasser und/oder Mager-/Vollmilch, löst, bzw. dispergiert und/oder emulgiert und anschließend einer Hitzebehandlung unterwirft. Die anschließende Trocknung der Mischung hat zur Folge, daß alle Komponenten homogen verteilt sind und eine nachträgliche Entmischung nicht mehr möglich ist.

Man geht insbesondere so vor, daß man die Komponenten der Rezepturen in einer entsprechenden Wassermenge vorlöst bzw. dispergiert, wobei eine Trockenmasse von 40 bis 50 % eingestellt wird. In der vorgegebenen Wassermenge, die auf 60 bis 80°C erwärmt wird, löst bzw. dispergiert man nacheinander die Proteinkonzentrate, L-Aminosäuren, die Mineralstoff- und andere Bestandteile der Rezepturen (man vergleiche die Beispiele) und rührt mit einem Intensivrührwerk homogen und klumpenfrei.

Den Ansatz kann man auf 95°C erhitzen und mittels UHT-Behandlung sterilisieren, um eine einwandfreie bakteriologische Qualität des Endproduktes zu erhalten. Danach erfolgt eine Homogenisierung des Ansatzes und anschließend eine Sprühtrocknung des Konzentrates, wobei Sprühtrocknungsanlagen mit sowohl Düsen als auch mit Scheiben zur Anwendung gebracht werden können.

Das sprühgetrocknete Pulver ist homogen, gutdosierbar, leicht löslich, entmischt nicht und kann sofort abgepackt werden. Die Haltbarkeit des so gewonnenen Pulvers ist gut und beträgt mindestens zwei Jahre. Das Pulver kann in einem weiteren Arbeitsschritt granuliert oder instantisiert werden.

Die Herstellung von Zusätzen (Supplementen) zur Frauenmilch sowie von Frühgeborenen- und Säuglingsnahrungen erfolgt in der Art, daß zunächst die entsprechenden Mengen Proteinkonzentrat und/oder Magermich oder Vollmilch in Wasser bei 60-80 °C dispergiert bzw. gelöst werden, wobei von einer Trockenmasse von 30-50% ausgegangen wird. Danach werden nacheinander die L-Aminosäuren, Kohlenhydrate (z.B. Laktose, Maltodextrine, Stärke) und Mineralstoffe zugegeben und klumpenfrel eingerührt.

Zweckmäßigerweise wird ein Intensivrührwerk für die Herstellung des Ansatzes verwendet. Die Emulgatoren werden im Fett vorgelöst; die auf 60-80°C erwärmten Fette werden dem Ansatz zugesetzt und gleichmäßig untergerührt. Anschließend werden die Vitamine im Ansatz gelöst. Der fertige Ansatz wird homogen-siert (100-200 bar) und mit Sprühtrocknern zu Pulververarbeitet. Die so erhaltenen Pulver können in weiteren Arbeitsschritten instantisiert werden.

Die Herstellung von gebrauchsfertigen, flüssigen Frühgeborenen- und Säuglingsmilchnahrungen erfolgt nach einem ähnlichen Schema. Dabei wird die Vorgabe von Wasser oder Milch so ausgelegt, daß die entsprechende Konzentration der Trockenstoffe zwischen 12-16% liegt.

Anstelle von intakten Proteinen können auch hydrolysierte Proteine (z.B. Molkenproteinhydrolysate, Caseinhydrolysate, Sojaproteinhydrolysate, Kollagenhydrolysate) eingesetzt werden, um Eiweißmischungen mit optimaler biologischer Wertigkeit herzustellen. Dadurch ist es erfindungsgemäß möglich, auch hypoallergene Proteinmischungen und Etweißgrundmischungen zur Herstellung hypoallergener Säuglingsnahrungen herzustellen.

Bei der Berechnung der Aminosäurewerte der erfindungsgemäßen Mischungen ist noch folgendes zu berücksichtigen.

Im allgemeinen wird der für ein Protein oder Peptid analysierte bzw. ermittelte Aminosäurewert in g ausgedrückt und auf 100 g pro Protein oder Peptid bezogen. Nun ist aber die relative Aminosäurenzusammensetzung für jedes Protein oder Peptid unterschiedlich. Zudem enthalten 100 g Protein bzw. Peptid mehr als 100 g Aminosäuren, da bei der Aufspaltung der das Peptid bzw. Protein bildenden Aminosäuresequenz Wasser eingelagert wird, so daß die Summe der aus dem Protein bzw. Peptid entstandenen Aminosäure größer als 100 g ist. So beträgt beispielsweise die Summe der Aminosäuren beim Kuhmilcheiweiß etwa 110 g und beim Serumalbumin etwa 108 g, wobei es auch Proteine und Peptide gibt, bei denen in 100 g Protein bzw. Peptid 125 g und mehr Aminosäuren enthalten sind.

Um diesen Umstand Rechnung zu tragen, erfolgt die Berechnung der Aminosäurewerte, die auf die Gesamtaminosäuren bezogen sind, auf Basis der in g ausgedrückte Molekulargewichte der freien Aminosäuren abzüglich des Molekulargewichtes von Wasser. Auch die Berechnung der Gesamtaminosäuren erfolgt auf Basis der um den Wasseranteil reduzierten Molekulargewichte der jeweiligen Aminosäuren.

Werden die Werte jedoch nicht auf die Gesamtaminosäuren bzw. die Summe der Aminosäuren bezogen (z.B.

g/100 g Aminosäuren) sondern auf eine Nahrung oder ein anderes Produkt, dann wird von denjenigen Werten ausgegangen, die <u>nicht</u> um das Molekulargewicht von Wasser reduziert sind. Mit anderen Worten, das Molekulargewicht der freien Aminosäure einschließlich des Wasseranteils geht in die Berechnung ein.

Wenn im übrigen von Aminosäuren die Rede ist, bezieht sich dies natürlich auf die L-Aminosäuren.

<u>Ergebnisse klidinischer Studien mit Nahrungen mit optimierter Protein /Aminosäurenzusammensetzung</u>

Nachstehend ist die bereits zuvorerwähnte klinische Untersuchung näher erläutert, die unter Verwendung erfindungsgemäßer Mischungen durchgeführt wurde.

1) Eiweißsupplement zur Anreicherung von Frauenmilch zur Ernährung von Frühgeborenen und Small-for-date-Kindern

In der Studie wurden Frühgeborene mit Humanmilch ernährt, die mit einem Aminosäuren-optimierten Supplement angereichtert war. Als Kontrollgruppe dienten Frühgeborene, bei denen die Humanmilch mit isolierten Proteinen aus Humanmilch angereichter wurde.

Das Aminosäuren-optimierte Supplement hatte folgende Zusammensetzung:

| Protein (N x 6.38) | 20.1 % |
|---|---|
| Kohlenhydrate | 70.4 % |
| Fett | 0.6 % |
| Mineralstoffe | 8.4 % |
| Vitamine | 0.5 % |

Während der gesamten Dauer der Studie (25 Tage) wurde ein optimales Wachstum mit einer Gewichtszunahme von durchschnittlich 17.3 g/kg/d, einem Längenwachstum von 1.1 cm/Woche und einer Zunahme des Kopfumfanges von 0.9 cm/Woche erzielt. Vergleichbare Werte wurden in der Kontrollgruppe gemessen.

Das optimierte Supplement führte neben dem sehr guten Wachstum der Säuglinge auch zu Plasmaaminosäurespiegeln, die mit den Plasmaspiegeln der Kinder vergleichbarwaren, die Frauenmilch, supplementiert mit Frauenmilchproteinen, erhielten. Die folgende Tabelle 1 zeigt eine Gegenüberstellung der Plasmaaminosäurespiegel der beiden Ernährungsgruppen.

Tab. 1: Plasmaaminosäurenspiegel von Frühgeborenen in μmol %;
A: Humanmilch + optimiertes Supplement;
B: Humanmilch + isolierte Humanmilchproteine

| | A | B |
|---|---|---|
| Taurin | 9.3 ± 2.4 | 9.1 ± 1.7 |
| Asparaginsäure | 1.2 ± 0.3 | 1.3 ± 0.1 |
| Hydroxyprolin | 8.4 ± 2.2 | 9.3 ± 1.9 |
| Threonin | 16.9 ± 4.3 | 23.2 ± 1.5 |
| Serin | 13.0 ± 2.7 | 14.8 ± 1.8 |
| Asparagin | 5.7 ± 1.4 | 8.2 ± 1.3 |
| Glutaminsäure | 10.8 ± 1.2 | 16.7 ± 2.2 |
| Glutamin | 38.1 ± 17.6 | 51.7 ± 3.2 |
| Prolin | 21.8 ± 7.8 | 27.4 ± 6.7 |
| Glycin | 17.2 ± 3.8 | 18.8 ± 2.0 |
| Alanin | 26.8 ± 10.4 | 27.7 ± 6.4 |
| Citrullin | 1.9 ± 0.7 | 2.5 ± 0.2 |
| Valin | 12.9 ± 3.0 | 15.8 ± 1.8 |
| Cystin | 3.4 ± 1.1 | 4.4 ± 0.7 |
| Methionin | 2.5 ± 0.6 | 3.0 ± 0.4 |
| Isoleucin | 6.9 ± 1.3 | 7.1 ± 1.1 |
| Leucin | 10.6 ± 2.3 | 11.1 ± 1.6 |
| Tyrosin | 12.0 ± 4.4 | 18.6 ± 4.3 |
| Phenylalanin | 5.3 ± 0.7 | 5.0 ± 0.9 |
| Ornithin | 9.1 ± 3.8 | 14.4 ± 3.5 |
| Lysin | 14.0 ± 4.7 | 20.0 ± 2.8 |
| Histidin | 7.8 ± 1.5 | 8.4 ± 1.6 |
| Arginin | 7.0 ± 2.9 | 9.0 ± 1.3 |

2) Frühgeborenennahrung mit optimierter Eiweiß-/Aminosäurenmischung (flüssig)

Die hier beschriebene Nahrung wurde für Frühgeborene entwickelt, die nicht oder nicht ausreichend mit Muttermilch ernährt werden können.

In einer Studie wurden Frühgeborene mit dieser Nahrung ernährt und das Wachstum, die Plasmaaminosäurenspiegel sowie die Energie- und Stickstoffbilanzen mit den Kindern verglichen, die ausschließlich mit Humanmilch ernährt wurden.

Die Aminosäuren-optimierte Nahrung hatte folgende Hauptbestandteile:

| Protein (N x 6.25) | 1.67 % |
|---|---|
| Kohlenhydrate | 4.40 % |
| Fett | 4.00 % |
| Wasser | 86.00 % |

Die Tabelle 2 zeigt eine Gegenüberstellung der Gewichtszunahmen, des Längenwachstums und der Zunahmen des Kopfumfanges der untersuchten Frühgeborenen.

**Tab. 2:** Gewichtszunahme, Längenwachstum, Zunahme des Kopfumfanges;
  A: optimierte Frühgeborenennahrung
  B: Humanmilch

|  | A | B |
|---|---|---|
| Gewichtszunahme (g/kg/d) | 16.3 | 17.0 |
| Längenwachstum (cm/Woche) | 1.8 | 1.3 |
| Zunahme des Kopfumfanges (cm/Woche) | 1.1 | 0.9 |

Sowohl die Energie- als auch die Stickstoffbilanzen führten bei beiden Gruppen zu sehr ähnlichen Erbegnissen.

Mit der optimierten Frühgeborenennahrung konnten Plasmaaminosäurenspiegel erzeilt werden, die vergleichbar waren mit denen von Humanmilch-ernährten Frühgeborenen.

Nachstehend sind bevorzugte erfindungsgemäße Mischungen an Hand von Belspielen naher beschrieben.

Beispiel 1

Eiweißsupplementierung zur Anreicherung von Frauenmilch zur Ernährung von Frühgeborenen und Small-for-date-Kinder.

8

## 1.1 Zusammensetzung

| | |
|---|---|
| entmineralisiertes Molkenprotein (Proteingehalt -(N x 6,38)- : 76 %) | 4,786 % |
| Natriumcaseinat (Proteingehalt -(N x 6,38)- : 90 %) | 4,616 % |
| L-Histidin | 0,136 % |
| L-Isoleucin | 0,315 % |
| L-Leucin | 0,398 % |
| L-Lysin-L-Glutamat | 0,339 % |
| L-Trytophan | 0,078 % |
| L-Valin | 0,145 % |
| Magnesium-L-Aspartat | 0,364 % |
| L-Cystin | 0,058 % |
| L-Glutaminsäure | 0,204 % |
| L-Glycin | 0,048 % |
| L-Prolin | 0,485 % |
| L-Tyrosin | 0,170 % |
| L-Phenylalanin | 0,068 % |
| Taurin | 0,067 % |
| Kochsalz | 0,830 % |
| Calciumglycerophosphat | 6,000 % |
| Vitaminmix | 0,500 % |
| Maltodextrin (DE 5) | 80,393 % |
| | 100,000 % |

Beispiel 1

b) Aminosäurenanalyse (g/100 g Produkt, g/100 g Aminosäuren)

| | g / 100 g Produkt | g /100 Aminosäuren |
|---|---|---|
| Asparaginsäure + Asparagin | 1,02 | 8,79 |
| Threonin | 0,58 | 4,91 |
| Serin | 0,53 | 4,37 |
| Glutaminsäure + Glutamin | 2,06 | 18,02 |
| Prolin | 1,20 | 10,09 |
| Glycin | 0,19 | 1,44 |
| Alanin | 0,38 | 3,02 |
| Cystin + Cystein | 0,21 | 1,93 |
| Valin | 0,62 | 5,23 |
| Methionin | 0,24 | 2,10 |
| Isoleucin | 0,76 | 6,53 |
| Leucin | 1,22 | 10,48 |
| Tyrosin | 0,51 | 4,58 |
| Phenylalanin | 0,41 | 3,64 |
| Histidin | 0,33 | 2,91 |
| Lysin | 0,86 | 7,52 |
| Arginin | 0,30 | 2,68 |
| Tryptophan | 0,22 | 2,00 |
| | 11,64 | 100,24 * |

*) Abweichung von 100 durch analytische Gegebenheiten bedingt

Beispiel 1

1.3. Herstellung

Chargengröße: 100 Kg Pulver

In einem heizbaren Behälter mit Intensivrührwerk, z.B. Ultraturrax, Y-Stral, werden ca. 45 l Wasser auf 60 - 80 °C angewärmt. Nacheinander werden entmineralisiertes Molkenprotein und Natriumcaseinat eingerührt und klumpenfrei dispergiert. Danach werden nacheinander L-Histidin, L-Isoleucin L-Leucin, L-Lysin-L-Glutamal, L-Tryptophan, L-Valin, Magnesium-L-Aspartat, L-Cystin, L-Glutaminsäure, L-Glycin, L-Prolin, L-Tyrosin, L-Phenylalanin und Taurin dem Ansatz zugegeben.

Die wasserlöslichen L-Aminosäuren werden zweckmäßigerweise zuvor in etwas warmem Wasser vorgelöst. Dadurch ist eine bessere Verteilung im Ansatz gegeben.

Nach vollständiger Lösung aller Komponenten bzw. Dispergierung erfolgt die Zugabe von Kochsalz (in etwas warmen Wasser vorgelöst), Calciumglycerophosphat. Maltodextrin und Vitaminmix.

Nach vollständiger, klumpenfreier Auflösung wird das Konzentrat auf 90 - 95°C erwärmt (z.B. mittels Schabeerhitzer), auf 65 - 70°C gekühlt und anschließend bei 60 - 100 bar homogenisiert.

Das Homogenat wird in einem heizbaren Tank bei ca. 65 - 70 °C zwischengestapelt und anschließend sofort sprühgetrocknet und gesiebt (z.B. Algaier-Sieb). Das so gewonnene Pulver wird in Säcke oder Container abgenommen und in Beute oder Dosen verpackt.

Es können weitere Instantisier- und/oder Granulierprozesse angeschlossen werden.

Beispiel 2

Eiweißsupplementierung zur Anreicherung von Frauenmilch zur Ernährung von Frühgeborenen.

2.1 Zusammensetzung

| entmineralisiertes Molkenprotein (Proteingehalt -(N x 6,38)- : 76 %) | 1,745 % |
|---|---|
| Natriumcaseinat (Proteingehalt -(N x 6,38)- : 90 %) | 6,509 % |
| $\alpha$-Laktalbumin (Proteingehalt -(N x 6,38)- : 93 %) | 2,121 % |
| L-Histidin | 0,064 % |
| L-Isoleucin | 0,280 % |
| L-Leucin | 0,280 % |
| L-Valin | 0,120 % |
| Magnesium-L-Aspartat | 0,055 % |
| L-Glutaminsäure | 0,600 % |
| L-Prolin | 0,409 % |
| L-Tyrosin | 0,040 % |
| Alanin | 0,082 % |
| Taurin | 0,067 % |
| Kochsalz | 0,830 % |
| Calciumglycerophosphat | 6,000 % |
| Vitaminmix | 0,500 % |
| Maltodextrin (DE 5) | 80,298 % |
| | 100,000 % |

Beispiel 2

2.2. Analyse

a) Typanalyse:

| | 100 g | 3 g *) |
|---|---|---|
| Eiweiß (N x 6,38) (mit Aminosäuren-N) | 10,2 g | 0,31 g |
| Kohlenhydrate | 80,9 g | 2,43 g |
| Asche | 3,0 g | 0,09 g |
| Fett | 0,2 g | 0,01 g |
| Wasser | 3,0 g | 0,09 g |

*) Dosierung : auf 100 ml Frauenmilch = 3 g Produkt

Beispiel 2

b) Aminosäurenanalyse (g/100 g Produkt, g/100 Amnosäuren)

|  | g / 100 g Produkt | g / 100 Aminosäuren |
|---|---|---|
| Asparaginsäure + Asparagin | 1,17 | 9,02 |
| Threonin | 0,55 | 4,16 |
| Serin | 0,58 | 4,28 |
| Glutaminsäure + Glutamin | 2,31 | 18,09 |
| Prolin | 1,34 | 10,08 |
| Glycin | 0,23 | 1,56 |
| Alanin | 0,42 | 2,98 |
| Cystin + Cystein | 0,22 | 1,81 |
| Valin | 0,69 | 5,20 |
| Methionin | 0,26 | 2,04 |
| Isoleucin | 0,85 | 6,54 |
| Leucin | 1,37 | 10,54 |
| Tyrosin | 0,57 | 4,58 |
| Phenylalanin | 0,51 | 4,06 |
| Histidin | 0,38 | 3,00 |
| Lysin | 1,00 | 7,82 |
| Arginin | 0,32 | 2,56 |
| Tryptophan | 0,25 | 2,03 |
|  | 13,02 | 100,36 |

2.3 Herstellung

Man verfährt wie im Beispiel 1 beschrieben.

Beispiel 3

Hydrolysat-/Aminosäurenmischung als leicht verdaulicher Zusatz zur Frauenmilch zur Ernährung von Frühgeborenen und als hypoallergener Zusatz zur Frauenmilch für Säuglinge.

3.1 Zusammensetzung

| | |
|---|---|
| enzymatisches Hydrolysat von Molkenprotein (Proteingehalt -(N x 6,38)- : 79 %) | 5,125 % |
| enzymatisches Hydrolysat von Casein (Proteingehalt -(N x 6,38)- : 90 %) | 5,388 % |
| Glutathion, reduziert | 0,075 % |
| L-Histidin | 0,113 % |
| L-Isoleucin | 0,213 % |
| L-Leucin | 0,325 % |
| L-Lysin-L-Glutamat | 0,250 % |
| L-Tryptophan | 0,088 % |
| L-Valin | 0,038 % |
| Magnesium-L-Aspartat | 0,266 % |
| L-Prolin | 0,438 % |
| L-Tyrosin | 0,188 % |
| L-Phenylalanin | 0,038 % |
| Taurin | 0,067 % |
| Kochsalz | 0,830 % |
| Calciumglycerophosphat | 6,000 % |
| Vitaminmix | 0,500 % |
| Maltodextrin (DE 5) | 80,058 % |
| | 100,000 % |

Beispiel 3

3.2. Analyse

a) Typanalyse:

| | 100 g | 3 g *) |
|---|---|---|
| Eiweiß (N x 6,38) (mit Aminosäuren-N) | 10,3 g | 0,31 g |
| Kohlenhydrate | 83,1 g | 2,49 g |
| Asche | 3,0 g | 0,09 g |
| Fett | 0,6 g | 0,02 g |
| Wasser | 3,0 g | 0,09 g |

*) Dosierung : auf 100 ml Frauenmilch = 3 g Produkt

Beispiel 3

b) Aminosäureanalyse (g/100 g Produckt, g/ 100 Aminosäuren)

|  | g / 100 g Produkt | g / 100 Aminosäuren |
|---|---|---|
| Asparaginsäure + Asparagin | 1,00 | 8,84 |
| Threonin | 0,48 | 4,17 |
| Serin | 0,51 | 4,32 |
| Glutaminsäure + Glutamin | 2,02 | 18,13 |
| Prolin | 1,18 | 10,18 |
| Glycin | 0,19 | 1,48 |
| Alanin | 0,36 | 2,94 |
| Cystin + Cystein | 0,21 | 1,99 |
| Valin | 0,61 | 5,27 |
| Methionin | 0,22 | 1,98 |
| Isoleucin | 0,74 | 6,52 |
| Leucin | 1,19 | 10,49 |
| Tyrosin | 0,51 | 4,69 |
| Phenylalanin | 0,41 | 3,73 |
| Histidin | 0,33 | 2,98 |
| Lysin | 0,88 | 7,89 |
| Arginin | 0,28 | 2,57 |
| Tryptophan | 0,23 | 2,14 |
|  | 11,35 | 100,30 |

3.3 Herstellung

Man verfährt wie im Beispiel 1 beschrieben.

Beispiel 4

Frühgeborenennahrung mit optimierter Eiweiß-/Aminosäurenmischung (flüssig)

4.1 Zusammensetzung

| | |
|---|---|
| Milchfett | 0,960 % |
| Pflanzenfette (z.B. Maiskeimöl, Soyaöl) | 3,000 % |
| Emulgator (Lecithin) | 0,040 % |
| entmineralisiertes Molkenpulver (Proteingehalt -(N x 6,38)- : 13,5 %) | 3,540 % |
| Magermilch (Trockensubstanz: 9,0 %) (Proteingehalt -(N x 6,38)- : 36,5 % i.T.) | 22,520 % |
| Lactose | 0,140 % |
| Maltodextrin (DE 5) | 4,228 % |
| L-Histidin | 0,012 % |
| L-Isoleucin | 0,027 % |
| L-Leucin | 0,031 % |
| L-Lysin-L-Glutamat | 0,013 % |
| L-Tryptophan | 0,008 % |
| L-Valin | 0,002 % |
| L-Asparaginsäure | 0,021 % |
| L-Cystin | 0,007 % |
| L-Glutaminsäure | 0,006 % |
| L-Prolin | 0,051 % |
| L-Tyrosin | 0,014 % |
| Taurin | 0,007 % |
| Mineralstoffmix (Kupfersulfat, Zinksulfat, Kaliumjodat, Mangansulfat) | 0,141 % |
| Vitaminmix | 0,050 % |
| Calciumhydrogenphosphat | 0,056 % |
| Wasser | 65,125 % |
| | 100,000 % |

Beispiel 4

4.2. Analyse

a) Typanalyse

|  | 100 g |
|---|---|
| Eiweiß (N x 6,38) (mit Aminosäuren-N) | 1,4 g |
| Kohlenhydrate | 7,1 g |
| Asche | 0,4 g |
| Fett | 4,0 g |

Beispiel 4

b) Aminosäurenanalyse (g/100 g Produckt, g/100 Aminosäuren)

|  | g/100 g Produkt | g/100 Aminosäuren | Score |
|---|---|---|---|
| Asparaginsäure + Asparagin | 0,144 | 8,97 |  |
| Threonin | 0,077 | 4,70 |  |
| Serin | 0,075 | 4,47 |  |
| Glutaminsäure + Glutamin | 0,286 | 18,08 |  |
| Prolin | 0,163 | 9,91 |  |
| Glycin | 0,028 | 1,53 |  |
| Alanin | 0,054 | 3,10 |  |
| Cystin + Cystein | 0,027 | 1,79 |  |
| Valin | 0,086 | 5,24 |  |
| Methionin | 0,032 | 2,02 |  |
| Isoleucin | 0,103 | 6,40 |  |
| Leucin | 0,167 | 10,37 |  |
| Tyrosin | 0,070 | 4,54 |  |
| Phenylalanin | 0,060 | 3,85 |  |
| Histidin | 0,045 | 2,86 |  |
| Lysin | 0,120 | 7,58 |  |
| Arginin | 0,040 | 2,60 |  |
| Tryptophan | 0,031 | 2,03 |  |
|  | 1,608 | 100,06 |  |

Beispiel 4

4.3. Herstellungsverfahren: Frühgeborenennahrung, flüssig

Chargengröße: 1 000 kg

| | |
|---|---|
| Vollmilch mit 4,1 % Milchfett (entsprechend 9,6 kg Milchfett und Magermilch mit 20,268 kg Magermilch-Trockensubstanz) | 234,80 kg |
| Emulgator | 0,40 kg |
| Pflanzenfett | 30,00 kg |
| entmineralisiertes Molkenpulver | 35,40 kg |
| Laktose | 1,40 kg |
| Maltodextrin | 42,28 kg |
| L-Histidin | 0,12 kg |
| L-Isoleucin | 0,27 kg |
| L-Leucin | 0,31 kg |
| L-Lysin-L-Glutamat | 0,13 kg |
| L-Tryptophan | 0,08 kg |
| L-Valin | 0,02 kg |
| L-Asparaginsäure | 0,21 kg |
| L-Cystin | 0,07 kg |
| L-Glutaminsäure | 0,06 kg |
| L-Prolin | 0,51 kg |
| L-Tyrosin | 0,14 kg |
| Taurin | 0,07 kg |
| Mineralstoffmix | 1,41 kg |
| Vitaminmix | 0,50 kg |
| Calciumhydrogenphosphat | 0,56 kg |
| Wasser | 651,26 kg |
| | 1000,00 kg |

Beispiel 4

500,0 kg Wasser werden in einen heizbaren Tank mit Intensivrührwerk gegeben und auf 70 °C vorgewärmt. Danach werden 234,8 kg Vollmilch, eingestellt auf 4,1 % Milchfettgehalt, in das Wasser gegeben und die Mischung auf 70 °C erwärmt. Danach werden 35,4 kg entmineralisiertes Molkenpulvereingerührt und vollständig aufgelöst. 1,4 kg Laktose werden dem Ansatz zugegeben und aufgelöst. Danach werden nacheinander zugegeben:

0,12 kg L-Histidin
0,27 kg L-Isoleucin
0,31 kg L-Leucin
0,13 kg L-Lysin-L-Glutamat
0,08 kg L-Tryptophan

0,02 kg L-Valin

0,21 kg L-Asparaginsäure

0,07 kg L-Lysin

0,06 kg L-Glutaminsäure

0,51 kg L-Prolin

0,14 kg L-Tyrosin

0,07 kg Taurin

Die wasserlöslichen L-Aminosäuren werden in 50 °C warmem Wasser vorgelegt (ca. 20 Liter pro L-Aminosäure) und dann dem Ansatz zugefügt. Danach werden 0.56 kg Calciumhydrogenphosphat im Ansatz dispergiert. 0,4 Kg Emulgator werden in 30 Kg heißem, aufgeschmolzenen Pflanzenfett (ca. 50 - 55 °C) aufgelöst und das Fett dem Ansatz untergerührt. Mineralstoff- und Vitaminmix werden zugesetzt und gelöst. Der Ansatz wird mit Wasser auf 1000 kg eingestellt.

Der ca. 70 °C warme homogene Ansatz wird mit 180 bar homogenisiert, zwischengestapelt und auf 6 - 8 °C gekühlt. Nach analytischer Kontrolle des Fett- und Eiweißgehaltes wird der Ansatz UHT-erhitzt und die Milch aseptisch in Dosen abgefüllt oder in Glasflaschen. Alternativ wird die gekühlte Milch in Glasflaschen abgefüllt und terminalsterilisiert.

<u>Beispiel 5</u>

Adaptierte Säuglingsmilchnahrung mit optimierter Eiweiß-/Aminosäurenmischung (flüssig)

5.1 <u>Zusammensetzung</u>

| | |
|---|---|
| Milchfett | 2,160 % |
| Pflanzenfette (z.B. Maiskeimöl, Soyaöl) | 1,440 % |
| Emulgator (Lecithin) | 0,040 % |
| entmineralisiertes Molkenpulver (Proteingehalt -(N x 6,38)- : 13,5 %) | 3,290 % |
| Magermilch (Trockensubstanz 9,0 %) (Proteingehalt -(N x 6,38)- : 36,5 % i.T.) | 20,910 % |
| Lactose | 0,690 % |
| L-Histidin | 0,011 % |
| L-Isoleucin | 0,025 % |
| L-Leucin | 0,029 % |
| L-Lysin-L-Glutamat | 0,012 % |
| L-Tryptophan | 0,007 % |
| L-Valin | 0,002 % |
| L-Asparaginsäure | 0,019 % |
| L-Cystin | 0,006 % |
| L-Glutaminsäure | 0,005 % |
| L-Prolin | 0,047 % |
| L-Tyrosin | 0,013 % |
| Taurin | 0,007 % |
| Vitaminmix | 0,160 % |
| Wasser | 71,127 % |
| | 100,000 % |

Beispiel 5

5.2. Analyse

a) Typanalyse

|  | 100 g |
|---|---|
| Eiweiß (N x 6,38) (mit Aminosäure-N) | 1,3 g |
| Konlenhydrate | 7,2 g |
| Asche | 0,2 g |
| Fett | 3,6 g |

Beispiel 5

b) Aminosäurenanalyse (g/100 g Produckt, g/100 Aminosäuren)

|  | g/100 g Produkt | g/100 Aminosäuren |
|---|---|---|
| Asparaginsäure + Asparagin | 0,132 | 8,88 |
| Threonin | 0,072 | 4,75 |
| Serin | 0,069 | 4,44 |
| Glutaminsäure + Glutamin | 0,265 | 18,09 |
| Prolin | 0,151 | 9,91 |
| Glycin | 0,026 | 1,54 |
| Alanin | 0,050 | 3,10 |
| Cystin + Cystein | 0,024 | 1,73 |
| Valin | 0,080 | 5,26 |
| Methionin | 0,030 | 2,05 |
| Isoleucin | 0,096 | 6,44 |
| Leucin | 0,156 | 10,47 |
| Tyrosin | 0,065 | 4,55 |
| Phenylalanin | 0,055 | 3,81 |
| Histidin | 0,041 | 2,82 |
| Lysin | 0,112 | 7,64 |
| Arginin | 0,038 | 2,65 |
| Tryptophan | 0,028 | 1,99 |
|  | 1,490 | 100,11 |

Beispiel 5

5.3. Herstellungsverfahren: Säuglingsmilchnahrung, flüssig

Chargengröße: 1 000 kg

| | |
|---|---:|
| Sahne mit 9,36 % Milchfettgehalt (mit 18,828 kg Magermilch-Trockensubstanz) | 237,00 kg |
| Emulgator | 0,40 kg |
| Pflanzenfett | 14,40 kg |
| entmineralisiertes Molkenpulver | 32,90 kg |
| Laktose | 6,90 kg |
| L-Histidin | 0,11 kg |
| L-Isoleucin | 0,25 kg |
| L-Leucin | 0,29 kg |
| L-Lysin-L-Glutamat | 0,12 kg |
| L-Tryptophan | 0,07 kg |
| L-Valin | 0,02 kg |
| L-Asparaginsäure | 0,19 kg |
| L-Cystin | 0,06 kg |
| L-Glutaminsäure | 0,05 kg |
| L-Prolin | 0,47 kg |
| L-Tyrosin | 0,13 kg |
| Taurin | 0,07 kg |
| Vitaminmix | 1,60 kg |
| Wasser | 704,97 kg |
| | 1000,00 kg |

Beispiel 5

500 kg Wasser werden in einen heizbaren Tank mit Rührwerk gepumpt und auf 70 °C angewärmt. 237 kg Milch mit 9,1 % Milchfett (Sahne) und 18,828 Kg Magermilchtrockensubstanz werden zugesetzt und der Ansatz auf 70 °C angewärmt. Wie bei Beispiel 4 werden in gleicher Weise nacheinander entmineralisiertes Molkenpulver, Laktose, die L-Aminosäuren, das Taurin und die Emulgator/Fettmischung zugegeben und homogen verrührt. Danach erfolgt die Zugabe der Vitaminmischung und Wasserzugabe ad 1000 kg Mischung.

Der Ansatz wird mit 180 bar homogenisiert, auf 6 - 8 °C gekühlt, in Gläschen abgefüllt und sterilisiert.

Beispiel 6

Adaptierte Säuglingsmilchnahrung mit optimierter Eiweiß/Aminosäurenmischung als Sprühprodukt

6.1. Zusammensetzung

| | |
|---|---|
| Milchfett | 17,540 % |
| Pflanzenfette (z.B. Maiskeimöl, Soyaöl) | 11,200 % |
| Emulgator (Lecithin) | 0,500 % |
| entmineralisiertes Molkenpulver (Proteingehalt -(N x 6,38)- : 13,5 %) | 24,420 % |
| Magermilchpulver (Proteingehalt -(N x 6,38)- : 36,5 % i.T.) | 13,920 % |
| Lactose | 29,360 % |
| L-Histidin | 0,083 % |
| L-Isoleucin | 0,188 % |
| L-Leucin | 0,215 % |
| L-Lysin-L-Glutamat | 0,090 % |
| L-Tryptophan | 0,056 % |
| L-Valin | 0,014 % |
| L-Asparaginsäure | 0,146 % |
| L-Cystin | 0,049 % |
| L-Glutaminsäure | 0,042 % |
| L-Prolin | 0,354 % |
| L-Tyrosin | 0,098 % |
| Taurin | 0,025 % |
| Vitaminmix | 0,500 % |
| Mineralstoffmischung (Spurenelemente, Zn, Mn, Cu, J) | 0,500 % |
| Calciumcarbonat | 0,400 % |
| Kaliumchlorid | 0,300 % |
| | 100,000 % |

Beispiel 6

6.2. Analyse

a) Typanalyse

|  | 100 g | g/100 ml (13 %ige) Lösung) |
|---|---|---|
| Eiweiß (N x 6,38) (mit Aminosäuren-N) | 9,3 g | 1,2 g |
| Kohlenhydrate | 57,8 g | 7,5 g |
| Asche | 2,3 g | 0,3 g |
| Fett | 28,6 g | 3,7 g |
| Wasser | 2,0 g | - |

Beispiel 6

b) Aminosäurenanalyse (g/100 g Produkt, g/ 100 Aminosäuren)

|  | g/100 g Produkt | g/ 100 Aminosäuren |
|---|---|---|
| Asparaginsäure + Asparagin | 0,98 | 8,91 |
| Threonin | 0,53 | 4,73 |
| Serin | 0,51 | 4,46 |
| Glutaminsäure + Glutamin | 1,96 | 18,05 |
| Prolin | 1,13 | 9,96 |
| Glycin | 0,19 | 1,51 |
| Alanin | 0,37 | 3,14 |
| Cystin + Cystein | 0,19 | 1,79 |
| Valin | 0,59 | 5,22 |
| Methionin | 0,22 | 2,06 |
| Isoleucin | 0,71 | 6,43 |
| Leucin | 1,15 | 10,42 |
| Tyrosin | 0,48 | 4,53 |
| Phenylalanin | 0,41 | 3,82 |
| Histidin | 0,31 | 2,85 |
| Lysin | 0,83 | 7,60 |
| Arginin | 0,28 | 2,64 |
| Tryptophan | 0,21 | 2,01 |
|  | 11,05 | 100,13 |

Beispiel 6

6.3. Herstellung

Chargengröße: 100 kg

172,2 kg Sahne (mit 10,2 % Milchfett und 13,92 kg Magermilchtrockensubstanz) werden in einem heizbaren Tank mit Rührwerk gegeben und auf 70 °C erwärmt.

Unter intensivem Rühren werden nacheinander entmineralisiertes Molkenpulver, Laktose, die L-Aminosäuren, Taurin, Kaliumchlorid (in ca. 10 Liter heißem Wasser -(60 °C)-vorgelöst), Calciumcarbonat und die Mineralstoffmischung zugegeben und vollständig aufgelöst. 0,5 kg Emulgator werden in 11,2 kg heißer Pflanzenfettmischung (50 - 60 °C) aufgelöst und dem Ansatz Zugegeben. Danach wird die Vitaminmischung eingerührt.

Derfertige Ansatz wird auf 70 - 75 °C erwärmt und bei 180 bar homogenisiert. Danach wird das Konzentrat über einen Erhitzer auf 95 °C erwärmt, auf 70 °C gekühlt und sprühgetrocknet.

Beispiel 7

Säuglingsmilchnahrung mit optimierter Eiweiß-/Aminosäurenmischung als Sprühprodukt zur hypoallergenen Ernährung

7.1. Zusammensetzung

| | |
|---|---|
| Pflanzenfette (z.B. Maiskeimöl, Soyaöl) | 26,297 % |
| Emulgatoren (Lecithin) | 2,000 % |
| Molkenproteinhydrolysat (Proteinhalt -(N x 6,38)- : 79 %) | 5,857 % |
| Caseinhydrolysat (Proteinhalt -(N x 6,38)- : 90 %) | 6,157 % |
| Lactose, milchieiweißfrei | 36,800 % |
| Maltodextrin (DE 5) | 14,800 % |
| Stärke | 3,000 % |
| Glutathion (reduziert) | 0,086 % |
| L-Histidin | 0,129 % |
| L-Isoleucin | 0,243 % |
| L-Leucin | 0,371 % |
| L-Lysin-L-Glutamat | 0,286 % |
| L-Tryptophan | 0,100 % |
| L-Valin | 0,043 % |
| Magnesium-L-Aspartat | 0,304 % |
| L-Prolin | 0,500 % |
| L-Tyrosin | 0,214 % |
| L-Phenylalanin | 0,043 % |
| Vitaminmix | 0,310 % |
| Mineralstoffmischung (Calcium, Phosphor, Spurenelemente z.B. Fe, Zn, Mn, Cu, J) | 1,400 % |
| Citronensäure | 0,190 % |
| tri-Kaliumcitrat | 0,270 % |
| Kaliumchlorid | 0,600 % |
| | 100,000 % |

Beispiel 7

7.2 Analyse

a) Typanalyse

|  | 100 g | g/100 ml (13 %ige) Lösung) |
|---|---|---|
| Eiweiß (N x 6,38) (mit Aminosäuren-N) | 11,7 g | 1,5 g |
| Kohlenhydrate | 54,6 g | 7,1 g |
| Asche | 3,4 g | 0,4 g |
| Fett | 28,3 g | 3,7 g |
| Wasser | 2,0 g | - |

Beispiel 7

b) Aminosäurenanalyse (g/100 g Produkt, g/100 Aminosäuren)

|  | g/100 g Produkt | g/100 Aminosäuren |
|---|---|---|
| Asparaginsäure + Asparagin | 1,14 | 8,83 |
| Threonin | 0,55 | 4,19 |
| Serin | 0,58 | 4,31 |
| Glutaminsäure + Glutamin | 2,31 | 18,17 |
| Prolin | 1,34 | 10,13 |
| Glycin | 0,22 | 1,50 |
| Alanin | 0,41 | 2,93 |
| Cystin + Cystein | 0,24 | 1,99 |
| Valin | 0,70 | 5,30 |
| Methionin | 0,25 | 1,97 |
| Isoleucin | 0,85 | 6,57 |
| Leucin | 1,36 | 10,51 |
| Tyrosin | 0,58 | 4,68 |
| Phenylalanin | 0,47 | 3,75 |
| Histidin | 0,37 | 2,93 |
| Lysin | 1,01 | 7,94 |
| Arginin | 0,32 | 2,57 |
| Tryptophan | 0,26 | 2,12 |
|  | 12,96 | 100,38 |

## Beispiel 7

### 7.3. Herstellung

Chargengröße: 100 kg

In 100 Liter heißem Wasser (ca. 70 - 75 °C) werden unter intensivem Rühren nacheinander aufgelöst: Laktose, Maltodextrin, Stärke, Molkenproteinhydrolysat, Caseinhydrolysat, reduziertes Glutathion, L-Aminosäuren, Kaliumchlorid (in ca. 5 Liter 60 °C warmem Wasser vorgelöst), tri-Kaliumcitrat (in ca. 5 Liter heißem Wasser -(60 °C)- vorgelöst), Citronensäure (in ca. 3 Liter heißem Wasser -(60 °C)- vorgelöst) und die Mineralstoffmischung.

Die Emulgataren werden im heißen aufgeschmolzenen Fett (50 - 60 °C) vollständig aufgelöst und die Mischung dem Ansatz zugegeben. Danach wird die Vitaminmischung zugesetzt und vollständig aufgelöst.

Der Ansatz wird auf 70 - 75 °C erwärmt und mit 180 - 200 bar homogenisiert. Danach wird das Konzentrat in einem Erhitzer auf 95 °C erwärmt und anschließend sprühgetrocknet.

### Tabelle I

| Aminosäurenzusammensetzung gemäß dem nutritiver Eiweißanteil der Frauenmilch (g/100 g Gesamtaminosäuren) | |
|---|---|
| Asparaginsäure | 9,05 |
| Threonin | 4,26 |
| Serin | 3,92 |
| Glutaminsäure | 18,48 |
| Prolin | 10,23 |
| Glycin | 1,50 |
| Alanin | 2,98 |
| Cystin | 1,81 |
| Valin | 5,36 |
| Methionin | 1,77 |
| Isoleucin | 6,56 |
| Leucin | 10,64 |
| Tyrosin | 4,68 |
| Phenylalanin | 3,75 |
| Histidin | 2,93 |
| Lysin | 7,72 |
| Arginin | 2,34 |
| Tryptophan | 2,02 |

### Literatur

1. Commission of European Communities
First report of the scientific committee for food on the essential requirement of infant formulae and following-up milks based on cows milk protein
Luxemburg 1983, EUR 8753
2. Report of a Joint FAD/WHO Ad Hoc Expert Committee
Rome 1973, WHO Technical Report Series Nr. 522
3. ESPGAN Committe on Nutrition

Guidelines on Infant Nutrition

Acta Paediat Scand Suppl. 262, 1977

4. Bindels J G und Harzer G

Ernährungs-Umschau 32 (1985) 223-224

5. Ogra S S, Weintrauv D and Ogra PL

J Immunol 119 (1977) 245-248

6. Hambraeus L, Fransson G B and Lönnerdal B

Lancet II (1984) 167-168

7. Pohlandt F und Kupferschmidt C

Klin Päd 19 (1985) 164-166

8 Heinson S A A, Anderson G H and Bryan M H

Am J Clin Nutr 33 (1980) 811-815

9. Hibberd C, Brooke O G, Carter N D and Wood C

J Human Nutr 35 (1981) 189-198

10. Sann L, Beinvenu F, Lahet C, Beinvenu J and Bethenof M

Acta Paediat Scand 70 (1981) 115-116

**Patentansprüche**

1.  Protein-, Peptid- und Aminosäuremischungen mit Ausnahme solcher aus Muttermilch auf Basis von für den Säugling verdaulichen Eiweißen sowie gegebenenfalls deren Hydrolysaten und freien Aminosäuren folgender Aminosäurenzusammensetzung:

| Aminosäuren | g/100 g Gesamtaminosäuren* |
|---|---|
| Asparaginsäure + Asparagin | 7,69 - 10,41 |
| Threonin | 3,62 - 4,90 |
| Serin | 3,33 - 4,51 |
| Glutaminsäure + Glutamin | 15,71 - 21,25 |
| Prolin | 8,70 - 11,76 |
| Glycin | 1,27 - 1,73 |
| Alanin | 2,53 - 3,43 |
| Cystin + Cystein | 1,45 - 2,17 |
| Valin | 4,56 - 6,16 |
| Methionin | 1,42 - 2,12 |
| Isoleucin | 5,58 - 7,54 |
| Leucin | 9,04 - 12,24 |
| Tyrosin | 3,98 - 5,38 |
| Phenylalanin | 3,19 - 4,31 |
| Histidin | 2,49 - 3,37 |
| Lysin | 6,56 - 8,88 |
| Arginin | 1,99 - 2,69 |
| Tryptophan | 1,72 - 2,32 |

*berechnet auf Basis des bzw. der Molekulargewichte(s) der Aminosäure(n) jeweils abzüglich des Molekulargewichtes von Wasser

2. Protein-, Peptid- und Aminosäurenmischungen nach Anspruch 1 mit folgender Aminosäurenzusammensetzung:

| Aminosäuren | g/100 g Gesamtaminosäuren |
|---|---|
| Asparaginsäure + Asparagin | 7,95 - 9,72 |
| Threonin | 3,92 - 4,90 |
| Serin | 3,87 - 4,50 |
| Glutaminsäure + Glutamin | 16,34 - 20,70 |
| Prolin | 9,16 - 11,20 |
| Glycin | 1,35 - 1,65 |
| Alanin | 2,70 - 3,31 |
| Cystin + Cystein | 1,58 - 2,01 |
| Valin | 4,70 - 5,73 |
| Methionin | 1,74 - 2,12 |
| Isoleucin | 5,97 - 7,29 |
| Leucin | 9,42 - 11,51 |
| Tyrosin | 4,14 - 5,06 |
| Phenylalanin | 3,40 - 4,15 |
| Histidin | 2,67 - 3,27 |
| Lysin | 6,83 - 8,34 |
| Arginin | 2,30 - 2,69 |
| Tryptophan | 1,84 - 2,26 |

3. Protein-, Peptid- und Aminosäurenmischungen nach Anspruch 1 oder 2,
dadurch **gekennzeichnet**,
daß sie handelsübliche Proteine oder Peptide und handelsübliche proteinhaltige Rohstoffe wie Kuhmilch, Kuhmilchproteine, isolierte Kuhmilchproteinfraktionen, Proteinhydrolysate, Peptide und ggf. freie L-Aminosäuren enthält.

4. Protein-, Peptid- und Aminosäurenmischungen nach mindestens einem der Anprüche 1 bis 3,
dadurch **gekennzeichnet**,
daß sie Sojaeiweiß, Ziegenmilcheiweiß und/oder Rindfleischeiweiß enthält.

5. Verwendung der Protein-, Peptid- und Aminosäurenmischungen nach einem der Ansprüche 1 bis 4 als Proteinbasis zur Herstellung von Zusätzen zur Frauenmilch und als Proteinbasis zur Herstellung von Frühgeborenen- und anderen Säuglingsnahrungen und Säuglingsmilchnahrungen.

6. Verfahren zur Herstellung von Zusätzen zur Frauenmilch sowie von Frühgeborenen- und Säuglingsnahrungen auf Basis einer Protein-, Peptid- und Aminosäurenmischung gemäß einem der Ansprüche 1 bis 4,
dadurch **gekennzeichnet**,
daß man die Rohstoffe in den errechneten Anteilen ggf. zusammen mit Vitaminen, Spurenelementen, Mineralstoffen, Fetten, Kohlenhydraten und/oder geeigneten Emulgatoren in Wasser und/oder Mager-Vollmich löst, bzw. dispergiert und/oder emulgiert und den flüssigen Ansatz ggf. pasteurisiert oder sterilisiert, homogenisiert und, sofern ein Pulver hergestellt werden soll, sprühtrocknet.

**Claims**

1. Protein, peptide and amino acid mixtures with the exception of those from mother milk based on albumins which the infant can digest and also, if applicable, the hydrolysates and free amino acids thereof having the following amino acid composition:

| Amino acids | g/100 g Total amino acids* |
|---|---|
| Asparaginic acid + asparagine | 7.69 - 10.41 |
| Threonine | 3.62 - 4.90 |
| Serine | 3.33 - 4.51 |
| Glutaminic acid + glutamine | 15.71 - 21.25 |
| Proline | 8.70 - 11.76 |
| Glycine | 1.27 - 1.73 |
| Alanine | 2.53 - 3.43 |
| Cystine + cysteine | 1.45 - 2.17 |
| Valine | 4.56 - 6.16 |
| Methionine | 1.42 - 2.12 |
| Isoleucine | 5.58 - 7.54 |
| Leucine | 9.04 - 12.24 |
| Tyrosine | 3.98 - 5.38 |
| Phenylalanine | 3.19 - 4.31 |
| Histidine | 2.49 - 3.37 |
| Lysine | 6.56 - 8.88 |
| Arginine | 1.99 - 2.69 |
| Tryotophan | 1.72 - 2.32 |

\* calculated on the basis of the molecular weight or weights of the amino acid(s) in each case minus the molecular weight of water.

2. Protein, peptide and amino acid mixtures according to claim 1 having the following amino acid composition:

| Amino acids | g/100 g Total amino acids |
|---|---|
| Asparaginic acid + asparagine | 7.95 - 9.72 |
| Threonine | 3.92 - 4.90 |
| Serine | 3.87 - 4.50 |
| Glutaminic acid + glutamine | 16.34 - 20.70 |
| Proline | 9.16 - 11.20 |
| Glycine | 1.35 - 1.65 |
| Alanine | 2.70 - 3.31 |
| Cystine + cysteine | 1.58 - 2.01 |
| Valine | 4.70 - 5.73 |
| Methionine | 1.74 - 2.12 |
| Isoleucine | 5.97 - 7.29 |
| Leucine | 9.42 - 11.51 |
| Tyrosine | 4.14 - 5.06 |
| Phenylalanine | 3.40 - 4.15 |
| Histidine | 2.67 - 3.27 |
| Lysine | 6.83 - 8.34 |
| Arginine | 2.30 - 2.69 |
| Tryptophan | 1.84 - 2.26 |

3. Protein, peptide and amino acid mixture according to claim 1 or 2, characterised in that it contains commercially available proteins or peptides and commercially available raw materials containing protein, such as cow's milk, cow's milk proteins, isolated protein fractions of cow's milk, protein hydrolysates, peptides and, if applicable, free L-amino acids.

4. Protein, peptide and amino acid mixture according to at least one of the claims 1 to 3, characterized in that it contains soya albumin, goat's milk albumin and/or beef albumin,

5. Use of the protein, peptide and amino acid mixtures according to one of the claims 1 to 4, as a protein base for the preparation of additives for breast milk and as a protein base for the preparation of premature baby and other infant foods and infant milk foods.

6. Method for the preparation of additives for breast milk and also premature baby and infant foods based on a protein, peptide and amino acid mixture according to one of the claims 1 to 4, characterised in that the raw materials are dissolved or dispersed and/or emulsified in the calculated proportions, if applicable together with vitamins, trace elements, minerals, fats, carbohydrates and/or suitable emulsifiers in water and/or skimmed/full milk, and the liquid composition is, if applicable, pasteurized or sterilized, homogenized and, if a powder is to be prepared, spray-dried.

**Revendications**

1. Mélanges de protéines, de peptides et d'acides aminés (à l'exception de ceux du lait maternel) à base de protéines pouvant être digérées par le nourrisson, et éventuellement de leurs hydrolysats et d'acides aminés libres, ayant la composition d'acides aminés suivante:

| Acides aminés | g/100 g acides aminés totaux |
|---|---|
| Acide asparagique + asparagine | 7,69 - 10,41 |
| Thréonine | 3,62 - 4,90 |
| Sérine | 3,33 - 4,51 |
| Acide glutamique + glutamine | 15,71 - 21,25 |
| Proline | 8,70 - 11,76 |
| Glycine | 1,27 - 1,73 |
| Alanine | 2,53 - 3,43 |
| Cystine + cystéine | 1,45 - 2,17 |
| Valine | 4,56 - 6,16 |
| Méthionine | 1,42 - 2,12 |
| Isoleucine | 5,58 - 7,54 |
| Leucine | 9,04 - 12,24 |
| Tyrosine | 3,98 - 5,38 |
| Phénylalanine | 3,19 - 4,31 |
| Histidine | 2,49 - 3,37 |
| Lysine | 6,56 - 8,88 |
| Arginine | 1,99 - 2,69 |
| Tryptophane | 1,72 - 2,32. |

\* calculé sur la base de la masse moléculaire du ou des acides aminés, toujours aprés déduction de la masse moléculaire de l'eau.

2. Mélanges de protéines, de peptides et d'acides aminés selon la revendication 1, ayant la composition d'acides aminés suivante :

| Acides aminés | g/100 g acides aminés totaux |
|---|---|
| Acide asparagique + asparagine | 7,95 - 9,72 |
| Thréonine | 3,92 - 4,90 |
| Sérine | 3,87 - 4,50 |
| Acide glutamique + glutamine | 16,34 - 20,70 |
| Proline | 9,16 - 11,20 |
| Glycine | 1,35 - 1,65 |
| Alanine | 2,70 - 3,31 |
| Cystine + cystéine | 1,58 - 2,01 |
| Valine | 4,70 - 5,73 |
| Méthionine | 1,74 - 2,12 |
| Isoleucine | 5,97 - 7,29 |
| Leucine | 9,42 - 11,51 |
| Tyrosine | 4,14 - 5,06 |
| Phénylalanine | 3,40 - 4,15 |
| Histidine | 2,67 - 3,27 |
| Lysine | 6,83 - 8,34 |
| Arginine | 2,30 - 2,69 |
| Tryptophane | 1,84 - 2,26. |

3. Mélanges de protéines, de peptides et d'acides aminés selon la revendication 1 ou 2, caractérisés en ce qu'ils contiennent des protéines ou peptides du commerce et des matières premières protéiques du commerce telles que le lait de vache, des protéines du lait de vache, des fractions protéiques isolées du lait de vache, des hydrolysats protéiques, des peptides et éventuellement des acides L-aminés libres.

4. Mélanges de protéines, de peptides et d'acides aminés selon au moins l'une des revendications 1 à 3, caractérisés en ce qu'ils contiennent des protéines de soja, des protéines de lait de chèvre et/ou des protéines de viande de boeuf.

5. Utilisation des mélanges de protéines, de peptides et d'acides aminés selon l'une des revendications 1 ou 4, comme base protéique destinée à préparer des additifs au lait de femme comme base protéique pour préparer des aliments et des aliments lactés pour prématurés et autres nourrissons.

6. Procédé pour préparer des additifs au lait de femme, ainsi que des aliments pour prématurés et nourrissons à base d'un mélange de protéines, de peptides et d'acides aminés selon l'une des revendications 1 à 4, caractérisé en ce que les matières premières sont, en les quantités calculées, et éventuellement avec des vitamines, des oligo-éléments, des matières minérales, des matières grasses, des hydrates de carbone, et/ou des émulsifiants appropriés, dissoutes, en encore dispersées et/ou émulsifiées, dans de l'eau et/ou un mélange de lait écrémé et de lait entier, la masse réactionnelle liquide étant éventuellement pasteurisée ou stérilisée, homogénéisée et, si on veut la transformer en une poudre, séchée par atomisation.